# EUROPEAN PATENT APPLICATION

(11) **EP 4 671 219 A1**
(43) Date of publication of application: **31.12.2025**
(21) Application number: 25759041.4
(22) Date of filing: 29.04.2025
(51) Int. Cl.: C03C 13/00, C03B 37/01, C03B 37/07

(54) **GLASS FIBER COMPOSITION SUITABLE FOR LARGE WIND TURBINE BLADE, AND GLASS FIBERS**

(30) Priority: 17.05.2024 CN 202410616701
(71) Applicant: Taishan Fiberglass Inc., Taian, Shandong 271000 (CN)
(72) Inventor: TANG, Zhiyao, Taian, Shandong 271000 (CN); ZHANG, Degang, Taian, Shandong 271000 (CN); LI, Yongyan, Taian, Shandong 271000 (CN); WANG, Jiafang, Taian, Shandong 271000 (CN); NING, Shangpeng, Taian, Shandong 271000 (CN); LI, Guodong, Taian, Shandong 271000 (CN); XU, Dongzhi, Taian, Shandong 271000 (CN); KANG, Junfeng, Taian, Shandong 271000 (CN); LIU, Dan, Taian, Shandong 271000 (CN); DU, Fengling, Taian, Shandong 271000 (CN); LI, Fengxiang, Taian, Shandong 271000 (CN); LIU, Lina, Taian, Shandong 271000 (CN); WU, Guo, Taian, Shandong 271000 (CN); WANG, Dongdong, Taian, Shandong 271000 (CN); ZHANG, Yongbin, Taian, Shandong 271000 (CN); LIU, Xilong, Taian, Shandong 271000 (CN)
(74) Representative: Zacco GmbH
(86) International application number: PCT/CN2025/091969
(87) International publication number: WO 2025/237077

(57) **Abstract**

Provided in the present disclosure are glass fiber composition for large wind turbine blade and glass fiber, which belongs to the technical field of glass fibers. In the glass fiber composition, by mass percentage, each component has the following content: SiO₂: 57-62%, Al₂O₃: 16-21%, CaO: 0.4-4%, MgO: 13-18%, Fe₂O₃: 0.3-0.8%, Li₂O: 0.1-0.7%, Y₂O₃: 0-2.5%, ZnO: 0.1-4.0%, B₂O₃: 0.3-0.8%, CeO₂: 0.1-0.5%, and K₂O+Na₂O≤0.5%, with the balance being impurities. The glass fiber composition of the present disclosure is low in density, and a glass fiber prepared has a high elastic modulus and thus can better adapt to requirements of large-scale tank furnace production.

## Description

### Technical Field

The present disclosure belongs to the technical field of glass fibers, and specifically, to glass fiber composition for large wind turbine blade, and glass fiber.

### Background

With the transformation of a global energy structure and the strengthening of environmental awareness, offshore wind power has become the latest frontier in global wind power development. Compared with onshore wind power, the offshore wind power has the characteristics of being abundant in resource, high in power generation utilization hour, free in land occupation, and suitable for large-scale development. In China, the offshore wind power is also considered as a key area for the development of renewable energy, and is expected to enter a new phase of development during the 14th Five-Year Plan period. Therefore, a glass fiber also develops in the direction of ultra-high modulus, low density, excellent fatigue performance, and corrosion resistance.

The low-density glass fiber with ultra-high modulus can effectively reduce blade weight, improve power generation efficiency, and reduce costs in large-scale offshore wind turbine blades, thereby further promoting the development of the offshore wind power.

Disclosed in the Chinese patent CN113929299A are a high-modulus glass composition, a high-modulus glass fiber, and a composite material. The high-modulus glass fiber composition with an elastic modulus being 94-101 GPa is obtained by introducing 3-15% of a rare earth oxide and 0.1-2% of ZrO₂. A large number of rare earth oxides and ZrO₂ are introduced and has the density generally greater than 2.66 g/cm³, such that the glass fiber composition is not suitable for the lightweight development of large-scale offshore wind turbine blades.

Disclosed in the Chinese patent CN116282934A is a high-magnesium and high-specific modulus glass fiber composition. A glass fiber with an elastic modulus being 95-98.5 GPa is obtained by adjusting a ratio of MgO/Al₂O₃. In a large offshore wind turbine blade, the glass fiber composition still cannot adequately replace a carbon fiber.

In current low-density and high-modulus glass fiber components, the glass fiber component is generally located in a main phase region of cordierite or a main phase region of enstatite in a MgO-Al₂O₃-SiO₂ ternary phase diagram, is strong in crystallization capacity, and faces a series of problems such as reverse creeping of a leak plate, discharge spout blocking by crystallization particles, severe deformation of the leak plate, and shortened service life of the leak plate, etc. in large-scale tank furnace production.

In view of the above problems, it is urgent to develop a low-density and high-modulus glass fiber composition for a large wind turbine blade, which is excellent in mechanical property, weak in crystallization capacity, and small in crystallization particle, and thus more suitable for large-scale tank furnace production.

### Summary

The present disclosure is intended to provide glass fiber composition for large wind turbine blade. The glass fiber composition is low in density and high in elastic modulus. By adjusting a glass component and adding elements such as ZnO, Li₂O, B₂O, etc. to adjust a ratio of bridging oxygen to non-bridging oxygen in glass, a network structure of the glass is improved, the elastic modulus of the glass is effectively increased, and at the same time, the glass component deviates a main phase region of cordierite and a main phase region of enstatite in a MgO-Al₂O₃-SiO₂ ternary phase diagram, but crystallization at a high-temperature end of the glass is still dominated by cordierite, increasing the activation energy of crystallization reducing the crystallization capacity of the glass, thus causing the glass to be more suitable for large-scale tank furnace production requirements. The present disclosure simultaneously provides a glass fiber prepared by the glass fiber composition for a large wind turbine blade.

In the glass fiber composition for a large wind turbine blade of the present disclosure, by mass percentage, each component has the following content:
SiO₂: 57-62%, Al₂O₃: 16-21%, CaO: 0.4-4%, MgO: 13-18%, Fe₂O₃: 0.3-0.8%, Li₂O: 0.1-0.7%, Y₂O₃: 0-2.5%, ZnO: 0.1-4.0%, B₂O₃: 0.3-0.8%, CeO₂: 0.1-0.5%, and K₂O+Na₂O≤0.5%, with the balance being impurities.

Herein:
The mass percentage of ZnO and Al₂O₃ meets ZnO/Al₂O₃=0.02-0.35;
The mass percentage content of Li₂O+ZnO and B₂O₃ meets (Li₂O+ZnO)/B₂O₃≥1.0;
The mass percentage content of CeO₂ and Fe₂O₃ meets CeO₂/Fe₂O₃≥0.3; and
The mass percentage content of Y₂O₃ and ZnO meets Y₂O₃+ZnO: 1.0-5.0%.

A density of the glass fiber composition for a large wind turbine blade is ≤2.61 /cm³.

The glass fiber prepared by the glass fiber composition for a large wind turbine blade has the following properties.

A forming temperature of the glass fiber is 1280-1330 °C.

A specific modulus of the glass fiber is ≥3.80×10⁶ m.

An elastic modulus of the glass fiber is ≥98.7 GPa.

A liquidus temperature of the glass fiber is ≤1310 °C.

The glass fiber composition for a large wind turbine blade of the present disclosure is prepared by using the following raw materials:
Quartz powder, calcined kaolin, dolomite, magnesium oxide, colemanite, yttrium oxide, zinc oxide, cerium oxide, spodumene, mirabilite, and lithium slag waste. In the calcined kaolin, a sufficient amount of Al₂O₃ is introduced, and a sufficient amount of Fe₂O₃ is also introduced, such that the cost of the glass fiber composition is effective reduced. In the present disclosure, a small amount of TiO₂ is inevitably introduced, and part of spodumene is replaced with the lithium slag waste to introduce Li₂O, such that the cost of raw materials is greatly reduced, solid waste utilization can be realized, in line with the national dual carbon policy.

The SiO₂ is an important glass-forming oxide that forms a three-dimensional framework structure by connecting vertices of silicon-oxygen tetrahedra [SiO₄]. A Si-O bond is a polar covalent bond, which is strong, with ions and covalent bonds each accounting for 50%. The SiO₂ can improve the chemical stability and mechanical strength of glass. When the content is high, a high melting temperature is required, and fiber formation difficulty is increased, even leading to quartz crystallization. In the present disclosure, a content range of the SiO₂ is limited to 57-62%.

The Al₂O₃ is an intermediate oxide that has various coordination in the network structure of the glass. When there is less free oxygen in the glass, an aluminum oxide octahedron [AlO₆] is formed in a network gap; and when there is sufficient free oxygen, Al³⁺ captures non-bridging oxygen and reconnects a network that is originally broken by R₂O, thereby strengthening the structure. The proper amount of the Al₂O₃ can reduce the tendency towards crystallization of the glass, and improve the chemical stability and mechanical strength of the glass. However, excessive introduction increases the high-temperature viscosity of the glass, and increase the tendency towards crystallization of the cordierite. In the present disclosure, the content of the Al₂O₃ is limited to 16-21%.

The CaO is a network modifier, with a coordination number generally being 6. At a high temperature, an accumulation effect of Ca²⁺ is weak, and polarization is strong, reducing the high-temperature viscosity of the glass. The CaO may shorten the material property of the glass, facilitating large-scale tank furnace production. However, when the content of Ca²⁺ is too high, the glass becomes more brittle. Ca²⁺ is large in ionic radius, small in field strength, and weak in aggregation, and, in the glass, mainly plays a role in providing free oxygen and reducing the continuity of a silicon-oxygen skeleton, thereby reducing the elastic modulus of the glass. In the present disclosure, the content of the CaO is limited to 0.4-4%.

The MgO is an alkaline earth metal oxide, belongs to an inert gas cation, is used as a network modifying oxide in the glass, does not participate in the network, and the ionic bond has small single bond strength. In the glass, Mg²⁺ serves two purposes: first, the ion provides free oxygen, reducing the continuity of the silicon-oxygen skeleton; and second, the ion is located at an original break point to repair breaks in the silicon-oxygen network. The Mg²⁺ is small in ionic radius, larger in field strength, and stronger in aggregation, causing reaggregate broken network, and causing the network structure of the glass to be more compact, thereby effectively increasing the elastic modulus of the glass. In the present disclosure, the content of the MgO is limited to 13-18%.

The Fe₂O₃ exists primarily in the glass network in the form of two ions: Fe²⁺ and Fe³⁺. The Fe²⁺ may act as a network modifier to break partial [SiO₄] and [AlO₄] tetrahedra, so as to disrupt the network structure of the glass, thereby reducing the mechanical properties of the glass. The Fe³⁺ may form a triangular pyramidal network structure, which improves the network structure of the glass through aggregation, so as to increases the connectivity between [SiO₄] and [AlO₄], thereby increasing the elastic modulus of the glass. The elastic modulus of the glass may be effectively increased by properly introducing the Fe₂O₃ and increasing a ratio of Fe³⁺/Fe²⁺. However, excessive Fe₂O₃ affects the heat permeability of molten glass, not facilitating large-scale tank furnace production. In the present disclosure, the content of the Fe₂O₃ is limited to 0.3-0.8%.

The Na₂O and K₂O are glass modifying oxides. R⁺ is in a hole of the network structure of the glass, and can provide free oxygen, reduce a Si/O ratio, and increase the content of non-bridging oxygen. The appearance of the non-bridging oxygen causes the silicon-oxygen network to break, and its excess charge is neutralized by alkali metal ions. The silicon-oxygen tetrahedron loses its original integrity and symmetry, causing the loosening of the glass structure and deterioration of physical performance. However, a proper amount of the Na₂O and K₂O may effectively reduce the high-temperature resistivity of the glass, facilitating a utilization rate of an electric boosting system during large-scale tank furnace production, facilitating improvement of glass melting quality, thereby improving the fiber forming efficiency of the glass fiber. In the present disclosure, the content of K₂O+Na₂O is limited to be ≤0.5%.

Although the Li₂O, like Na₂O and K₂O, is a network modifying oxide, the Li₂O plays a unique role in the glass. When the Si/O ratio is large, free oxygen is mainly provided to increase the content of the non-bridging oxygen. The Li₂O has a bond-breaking effect to disrupt the integrity of the network structure of the glass, and thus has a strong fluxing effect. When the Si/O ratio is small, a radius of Li⁺ is smaller than that of K⁺ and Na⁺, the field strength is larger, mainly manifested as an accumulation effect, such that the network structure of the glass can be more compact, and the tendency towards crystallization of the glass can also be effectively reduced. However, a large amount of the Li₂O also increases the tendency towards crystallization of the glass. In the present disclosure, a content of the Li₂O is limited to 0.1-0.7%.

The B₂O₃ is a network former that uses a boron oxide triangle [BO₃] and a boron oxygen tetrahedron [BO₄] as structure units, which forms a network structure together with the silicon oxygen tetrahedron in borosilicate glass. If the proportion of [BO₄] is higher, the network structure is firmer. The high-temperature viscosity of the glass can be reduced by adding a small amount of the B₂O₃, facilitating clarification. When the content is too high, the proportion of [BO₃] increases, showing a boron anomaly phenomenon, thus leading to deterioration of physical performance of the glass. In the present disclosure, a content of the B₂O₃ is limited to 0.3-0.8%.

The Y₂O₃ acts as a network modifier in the glass, and provides free oxygen, reducing the connectivity between the [SiO₄] tetrahedra; and Y³⁺ is filled in a network gap to form a [YO₇] ligand with non-bridging oxygen, thereby improving the connectivity of the network structure units of the glass. By properly introducing the Y₂O₃, most Y³⁺ is distributed in gaps of the network structure of the glass, causing the network structure of the glass to be tightly connected, thereby effectively increasing the elastic modulus of the glass. Excessive Y₂O₃ exacerbates the degree of damage to the network structure, and the Y³⁺ has a limited effect on tightening the network structure, resulting in a reduction in the elastic modulus of the glass. In the present disclosure, a content of the Y₂O₃ is limited to 0-2.5%.

As a strong oxidant, the CeO₂ may release oxygen at a high temperature, promoting the removal of bubbles from the molten glass. The CeO₂ may effectively replace mirabilite (Na₂SO₄), reducing the introduction of Na⁺ into the glass while reducing the production of SO₂ gas during glass melting, reducing corrosion to a refractory material, lowering the content of SO₂ in kiln exhaust gases, and aligning with the national "dual carbon" policy. In the present disclosure, the content of the CeO₂ is limited to 0.1-0.5%.

The ZnO generally uses a zinc oxide octahedron [ZnO₆] as a network modifying oxide. When there is sufficient free oxygen in the glass, a zinc oxygen tetrahedron [ZnO₄] may be formed to enter the network structure of the glass, causing the structure of the glass to be more stable, and increasing the elastic modulus of the glass. However, introduction of the ZnO in the glass generally leads to gahnite (ZnAl₂O₄) crystallization and quartz crystallization. The gahnite has a melting point of 1950 °C, is not easy to melt, and seriously blocks a discharge spout, affecting a wire-drawing operation. The gahnite also leads to Cr enrichment in a triphasic interface region, producing magnesium chromite. Quartz crystallization usually floats on the surface of the molten glass in an operation channel, is extremely difficult to treat once formed, and further promotes the tendency towards crystallization of the gahnite at the discharge spout, seriously affecting the wire-drawing operation. In the glass system, the crystallization capacity of the cordierite is stronger due to the low CaO content. In the present disclosure, by introducing the ZnO and adjusting a ratio of the ZnO to the Al₂O₃, gahnite and quartz crystallization does not occur, and at the same time, the glass component may also deviate a central region of the cordierite in the MgO-Al₂O₃-SiO₂ ternary phase diagram, increasing the activation energy of cordierite crystallization, inhibiting the crystallization capacity, reducing a crystallization rate, thereby minimizing the tendency towards crystallization of the cordierite in the glass. During the wire-drawing operation, even if cordierite crystallization particles appear, due to its low tendency towards crystallization and high crystallization activation energy, the cordierite crystallization particles cannot grow rapidly without causing the reverse creeping or wire drifting of the leak plate. As a high field strength ion, the ZnO may induce the transformation of 4-coordinated [AlO₄] to 5-coordinated [AlO₅], and the [AlO₅] is connected to 3-coordinated oxygen Q3, causing the network structure of the glass to be more compact, thereby effectively increasing the elastic modulus of the glass. If excessive ZnO is used, the glass is easy to crystallize. In the present disclosure, the content of the ZnO is limited to 0.1-4.0%, and ZnO/Al₂O₃ is limited to be =0.02-0.35.

In a conventional glass system, the introduction of the B₂O₃ may effectively reduce the density of the glass. However, the 3-coordinated [BO₃] is poor in stability, and significantly reduces the modulus of the glass fiber. The Li₂O and ZnO introduced in the present disclosure both play a role in inducing the transformation of [BO₃] to [BO₄], such that the fiber modulus may be effectively increased. However, excessive Li₂O significantly reduces the surface tension of the molten glass, not facilitating the wire-drawing operation, or even resulting in crystallization reverse creeping; and excessive ZnO leads to gahnite and quartz crystallization. In the present disclosure, by adjusting a ratio of Li₂O+ZnO to B₂O₃ to fully achieve the synergistic effect of the Li₂O and the ZnO, the transformation of [BO₃] to [BO₄] is promoted to a maximum content, and the occurrence of low surface tension of glass liquid, increased upper limit of crystallization, and abnormal boron phenomena is avoided at the same time, thereby reducing the density of the glass while improving the fiber modulus without causing adverse effects to the wire-drawing operation. In the present disclosure, (Li₂O+ZnO)/B₂O₃ is limited to be ≥1.0.

In the present disclosure, the Al₂O₃ is introduced through the calcined kaolin, and the lithium slag waste is used at the same time, such that partial Fe₂O₃ is inevitably introduced. Generally, excessive Fe₂O₃ leads to an increase in FeO content in the glass, seriously affecting the heat permeability of the molten glass, thereby affecting the melting quality of the molten glass. In the present disclosure, the transformation of Fe²⁺ to Fe³⁺ is promoted by introducing a proper amount of the CeO₂ and through its strong oxidizing properties, effectively improving the heat permeability of the molten glass, thereby facilitating large-scale tank furnace production. In another aspect, the FeO content reduces, and the Fe³⁺/Fe²⁺ ratio increases. Moreover, the CeO₂ may induce the transformation of Fe²⁺ to Fe³⁺ to increase the Fe³⁺ content, and the connectivity between [SiO₄] and [AlO₄] is increased, such that the elastic modulus of the glass may be effectively increased. In the present disclosure, CeO₂/Fe₂O₃ is limited to be ≥0.3.

In the present disclosure, the density of the glass is influenced by the molar mass of the glass oxide composition and its internal structure, the ZnO and the Y₂O₃ have relatively high molar mass, and the Y³⁺ in the glass network gaps has a strong field effect, resulting in a compact glass structure and significantly increasing the density of the glass. In the present disclosure, Y₂O₃+ZnO is limited to be 1.0-5.0%.

The present disclosure has the following beneficial effects.

In order to reduce production costs, in the present disclosure, the Al₂O₃ is introduced through the calcined kaolin, and the lithium slag waste is used, but the introduced Fe₂O₃ in a conventional high-modulus formula generally acts as a harmful elemental impurity affecting the heat permeability of the glass. In the present disclosure, the proper amount of the CeO₂ is introduced to promote the transformation of Fe²⁺ to Fe³⁺, so as to increase the Fe³⁺/Fe²⁺ ratio, thereby effectively increasing the elastic modulus of the glass.

In the present disclosure, by introducing the proper amount of the Li₂O and the ZnO to promote the transformation of [BO₃] to [BO₄], the density of the glass is effectively reduced while the elastic modulus of the glass fiber is increased.

In the present disclosure, in the SiO₂, Al₂O₃, CaO, and MgO glass system, the proper amount of Li²⁺ and Y³⁺ having a high field strength are introduced to fully achieve their accumulation effects, so as to tighten the network structure of the glass, such that the elastic modulus is increased while crystallization activation energy of the glass system can also be improved, a crystallization barrier is increased, the tendency towards crystallization of the glass is reduced, and a liquidus temperature of the glass is reduced, thereby facilitating large-scale tank furnace production.

In the related art, in order to increase the elastic modulus of the glass, a large amount of the Al₂O₃ and the MgO is introduced, and the CaO content is reduced, causing the tendency towards crystallization of the cordierite in the glass fiber to be extremely strong, not facilitating large-scale tank furnace production. In the present disclosure, by introducing the proper amount of the ZnO, in an aspect, the free oxygen provided by the R₂O and the RO in the glass is captured by the Zn²⁺, the zinc oxygen tetrahedron [ZnO₄] is formed, and the network structure originally disconnected by the R₂O is re-connected, such that the network structure of the glass is strengthened, and the elastic modulus of the glass is increased. In another aspect, the tendency towards crystallization of the gahnite and the tendency towards crystallization of the quartz are increased by the ZnO, such that the glass component deviates the center of the cordierite phase region in the MgO-Al₂O₃-SiO₂ ternary phase diagram, cordierite crystallization is inhibited while the gahnite and quartz crystallization particles are prevented from appearing near the liquidus temperature.

In the present disclosure, when the proper amount of the ZnO is introduced, it is found that the ZnO may induce the transformation of 4-coordinated [AlO₄] to 5-coordinated [AlO₅], and the [AlO₅] is connected to 3-coordinated oxygen Q3, causing the network structure of the glass to be more compact, thereby effectively increasing the elastic modulus of the glass. In the present disclosure, by adjusting the ratio of the ZnO and the Al₂O₃, the effect of the Al₂O₃ on increasing the modulus in the glass fiber is achieved to a maximum content.

In the present disclosure, by controlling the introduction of the elements with large molar mass, the glass fiber composition with density ≤2.61 g/cm³ is obtained. Furthermore, by controlling the element ratio, the proportion of the non-bridging oxygen in the glass is reduced, and the network structure of the glass is enhanced, causing the elastic modulus of the glass fiber composition to be ≥98.7GPa, and a specific modulus to be ≥3.80×10⁶ m.

In the glass fiber composition for a large wind turbine blade provided in the present disclosure, its forming temperature is between 1280 and 1330 °C. The liquidus temperature of the glass fiber provided in the present disclosure does not exceed 1310 °C, and a difference value ΔT between the forming temperature and the liquidus temperature is > 0 °C. Through the adjustment of crystallization types, a crystallization rates, crystallization activation energy, and preparation processes, even if an operation window temperature ΔT is small, the glass fiber composition does not crystallize during production, meeting wire-drawing process requirements, thereby achieving large-scale tank furnace production.

### Detailed Description of the Embodiments

The present disclosure is described below with reference to the embodiments.

A process for preparing a glass fiber composition for a large wind turbine blade of the present disclosure includes the following steps.
(1) The mass of each raw material required is calculated according to the content of each component, each raw material is weighed and conveyed to a kiln head material bin after well pneumatic mixing, so as to obtain a mixed material, and then the mixed material is put into a large tank furnace at a constant speed using a feeding machine.
(2) The mixed material after mixing is melted in the tank furnace at 1450-1550 °C, and is clarified into homogeneous molten glass.
(3) The molten glass is drawn by a discharge spout on a platinum rhodium leak plate at 1280-1330 °C, so as to a glass fiber.
(4) The glass fiber is coated with a sizing agent through an oil application apparatus, and is pulled to a wire-drawing machine, so as to form a fiber product through wire drawing.

The present disclosure simultaneously provides a process for preparing a glass fiber composition for a large wind turbine blade. The leak plate and wire-drawing processes are improved, the reverse creeping of the leak plate is relieved, and the service life of the leak plate is prolonged, thereby improving the production efficiency of the glass fiber.

In the present disclosure, the operation window temperature ΔT is small. In order to meet wire-drawing process requirements and realizing large-scale tank furnace production, the following improvements are performed on the leak plate and wire-drawing processes.
(1) A pore diameter of a 1.8 mm discharge spout is decreased to 1.3 mm, and a length of the discharge spout is increased from 3.2 mm to 3.6 mm, so as to inhibit tendency towards crystallization of the molten glass at the discharge spout, thereby improving the reverse creeping of the molten glass during wire drawing.
(2) In order to rapid cool the molten glass after fiber formation to avoid formation of crystallization particles, the air conditioning wind speed is increased from original 15 m/s to 22 m/s, while an original solid cooling fin is replaced with a hollow water-cooled cooling fin to improve the cooling capacity of the leak plate and shorten the cooling time after the formation of the glass fiber, facilitating inhibition of the formation of the crystallization particles during the wire-drawing operation, thereby improving production efficiency.
(3) The small pore diameter of the leak plate, large length of the discharge spout, and high leak plate temperature inevitably lead to deformation and damage of the leak plate, especially cracking and material leakage at an electrode. By thickening the electrode from original 5 mm to 10 mm and using a leak plate reinforcing rib, high-temperature deformation and damage of the leak plate may be effectively mitigated, thereby prolonging the service life of the leak plate.

The following several parameters are selected when the overall performance of the glass fiber in the embodiments and comparative examples is verified.
1) A forming temperature, which is a temperature when the viscosity of the glass is 1000 Poise, may represent a forming temperature of fiber formation, and obtains the high-temperature viscosity of the glass by using a high temperature viscometer.
2) A liquidus temperature, which is a critical temperature at which the glass begins to crystallize, generally is an upper limit of a glass crystallization temperature, and obtains an upper limit temperature for crystallization of the glass by using a crystallization furnace.
3) ΔT is a difference value between the forming temperature and the liquidus temperature.
4) Crystallization type is tested by an X-ray diffractometer.
5) The state of crystallization particles is observed by using a polarization microscope. Grain count assessment grade per unit area (1 mm²): dense ( > 15 grains), moderate (5-15 grains), few ( < 5 grains); grain size assessment grade: large ( > 50 µm), moderate (20-50 µm), small ( < 20 µm).
6) A glass density is tested according to the standard test method for determining the glass density by the buoyancy method specified in ASTM C693.
7) An elastic modulus is tested according to the standard specified in ASTM D2343.
8) A specific modulus is a ratio of the elastic modulus of a material to the density: specific modulus=elastic modulus/(density*9.8), in 10⁶ m.

### Embodiments 1-8

The contents and performance indexes of the glass fiber composition in Embodiments 1-8 are shown in Table 1.

**Table 1 Table of contents and performance indexes of glass fiber composition in Embodiments 1-8**

| Embodiment | 1 | 2 | 3 | 4 | 5 | 6 | 7 | 8 |
|---|---|---|---|---|---|---|---|---|
| SiO₂ | 61.62 | 57.15 | 58.77 | 59.03 | 60.38 | 59.64 | 59.57 | 59.3 |
| Al₂O₃ | 17 | 20.8 | 16.7 | 17.24 | 18.54 | 18.11 | 17.97 | 18.2 |
| CaO | 0.84 | 3.75 | 1.79 | 0.43 | 1.65 | 0.42 | 1.33 | 2.49 |
| MgO | 16.5 | 15.04 | 17.8 | 16.23 | 13.37 | 16.82 | 16.74 | 16.33 |
| Fe₂O₃ | 0.42 | 0.33 | 0.33 | 0.48 | 0.67 | 0.36 | 0.43 | 0.36 |
| K₂O+Na₂O | 0.27 | 0.26 | 0.26 | 0.3 | 0.35 | 0.27 | 0.36 | 0.35 |
| Y₂O₃ | 1.3 | 0 | 2 | 1 | 1 | 2 | 0.5 | 1.3 |
| Li₂O | 0.4 | 0.3 | 0.3 | 0.5 | 0.6 | 0.3 | 0.4 | 0.1 |
| B₂O₃ | 0.4 | 0.4 | 0.5 | 0.7 | 0.6 | 0.5 | 0.4 | 0.5 |
| ZnO | 0.7 | 1.4 | 0.9 | 3.4 | 2.2 | 1 | 1.5 | 0.5 |
| CeO₂ | 0.15 | 0.2 | 0.3 | 0.3 | 0.3 | 0.2 | 0.4 | 0.25 |
| ZnO/Al₂O₃ | 0.04 | 0.07 | 0.05 | 0.20 | 0.12 | 0.06 | 0.08 | 0.03 |
| Li₂O+ZnO/B₂ O₃ | 2.75 | 4.25 | 2.40 | 5.57 | 4.67 | 2.60 | 4.75 | 1.20 |
| CeO₂/Fe₂O₃ | 0.36 | 0.61 | 0.91 | 0.63 | 0.45 | 0.56 | 0.93 | 0.69 |
| Y₂O₃+ZnO | 2.0 | 1.4 | 2.9 | 4.4 | 3.2 | 3 | 2 | 1.8 |
| Forming temperature °C | 1311.7 | 1293.3 | 1295.7 | 1320 | 1284.6 | 1317.4 | 1317.8 | 1313.1 |
| Liquidus temperature °C | 1285 | 1285 | 1278 | 1287 | 1262 | 1293 | 1283 | 1279 |
| ΔT °C | 26.7 | 8.3 | 17.7 | 33 | 22.6 | 24.4 | 34.8 | 34.1 |
| Elastic modulus GPa | 99.7 | 100.4 | 99.3 | 98.8 | 98.7 | 98.9 | 99.2 | 99.5 |
| Density g/cm³ | 2.59 | 2.61 | 2.61 | 2.61 | 2.6 | 2.59 | 2.59 | 2.6 |
| Specific modulus 10⁶ m | 3.93 | 3.93 | 3.88 | 3.86 | 3.87 | 3.90 | 3.91 | 3.91 |
| Crystallization type at liquidus temperature | Cordieri te | Cordieri te | Cordieri te | Cordieri te | Cordieri te | Cordieri te | Cordieri te | Cordieri te |
| Grain count | Few | Few | Few | Few | Few | Few | Few | Few |
| Grain size | Small | Moderat e | Small | Small | Small | Small | Small | Moderat e |

### Comparative examples 1-6

The contents and performance indexes of the glass fiber composition in Comparative examples 1-6 are shown in Table 2.

**Table 2 Table of contents and performance indexes of glass fiber composition in Comparative examples 1-6**

| Comparative example | 1 | 2 | 3 | 4 | 5 | 6 |
|---|---|---|---|---|---|---|
| SiO₂ | 61.82 | 61.82 | 61.82 | 61.82 | 57.5 | 61.82 |
| Al₂O₃ | 17 | 17 | 17 | 17 | 17 | 17 |
| CaO | 0.84 | 0.84 | 0.84 | 0.84 | 0.66 | 0.84 |
| MgO | 16.7 | 16.7 | 17 | 16.74 | 14.7 | 16.7 |
| Fe₂O₃ | 0.42 | 0.42 | 0.42 | 0.42 | 0.42 | 0.42 |
| K₂O+Na₂O | 0.27 | 0.27 | 0.27 | 0.27 | 0.27 | 0.27 |
| Y₂O₃ | 1.3 | 1.3 | 1.3 | 1.3 | 1.3 | 1.3 |
| Li₂O | 0 | 0.4 | 0.4 | 0.4 | 0.4 | 0.4 |
| B₂O₃ | 0.4 | 0 | 0.4 | 0.4 | 0.4 | 0.6 |
| ZnO | 0.7 | 0.7 | 0 | 0.26 | 6.8 | 0.1 |
| CeO₂ | 0.15 | 0.15 | 0.15 | 0.15 | 0.15 | 0.15 |
| ZnO/Al₂O₃ | 0.04 | 0.04 | 0 | 0.015 | 0.4 | 0.006 |
| Li₂O+ZnO/B₂O₃ | 1.75 | / | 1 | 1.65 | 18 | 0.83 |
| CeO₂/Fe₂O₃ | 0.36 | 0.36 | 0.36 | 0.36 | 0.36 | 0.36 |
| Y₂O₃+ZnO | 2.0 | 2.0 | 1.3 | 1.56 | 8.1 | 1.4 |
| Forming temperature °C | 1328.0 | 1313.2 | 1298.8 | 1293.7 | 1302.2 | 1300.8 |
| Liquidus temperature °C | 1350 | 1339 | 1331 | 1309 | 1349 | 1322 |
| ΔT °C | -22 | -25.8 | -32.2 | -15.3 | -46.8 | -21.2 |
| Elastic modulus GPa | 97.2 | 97.6 | 97.4 | 97.1 | 97.3 | 97.0 |
| Density g/cm³ | 2.62 | 2.63 | 2.61 | 2.62 | 2.65 | 2.62 |
| Specific modulus 10⁶ m | 3.79 | 3.79 | 3.81 | 3.78 | 3.75 | 3.78 |
| Crystallization type at liquidus temperature | Cordierite, enstatite | Cordierite | Cordierite, enstatite | Cordierite, gahnite | Gahnite, quartz | Cordierite, quartz |
| Grain count | Dense | Moderate | Dense | Dense | Moderate | Moderate |
| Grain size | Moderate | Large | Moderate | Moderate | Large | Large |

The glass fiber compositions in Embodiments 1-8 and Comparative examples 1-6 inevitably contain impurities, and the balance in the formulation is the content of impurities.

From the above, it may be learned that, in Embodiments 1-8, by introducing the proper amount of the Li₂O and the ZnO to promote the transformation of [BO₃] to [BO₄], the density of the glass is effectively reduced while the elastic modulus of the glass fiber is increased.

In Comparative examples 1-3, the absence of any one of Li₂O, ZnO, and B₂O₃ makes it difficult to achieve tank furnace production.

In Comparative examples 4-5, the mass percentages of the ZnO and the Al₂O₃ are respectively 0.015 and 0.4, which are not within a range of ZnO/Al₂O₃ = 0.02-0.35, resulting in a poor effect, and making it difficult to achieve tank furnace production.

In Comparative example 6, the mass percentage content of Li₂O+ZnO and B₂O₃ does not meet (Li₂O+ZnO)/B₂O₃≥1.0, which is only 0.83, also resulting in a poor effect, and making it difficult to achieve tank furnace production.

To sum up, Comparative examples 1-6 all cannot achieve the purpose of the present disclosure, while the glass fiber compositions with density ≤2.61 g/cm³ are obtained in Embodiments 1-8. Furthermore, by controlling the element ratio, the network structure of the glass is enhanced, causing the elastic modulus of the glass fiber to be ≥98.7GPa, and the specific modulus to be ≥3.80×10⁶ m.

## Claims

1. A glass fiber composition for a large wind turbine blade, wherein by mass percentage, each component has the following content:
SiO₂: 57-62%, Al₂O₃: 16-21%, CaO: 0.4-4%, MgO: 13-18%, Fe₂O₃: 0.3-0.8%, Li₂O: 0.1-0.7%, Y₂O₃: 0-2.5%, ZnO: 0.1-4.0%, B₂O₃: 0.3-0.8%, CeO₂: 0.1-0.5%, and K₂O+Na₂O≤0.5%, with the balance being impurities;
the mass percentage of ZnO and Al₂O₃ meets ZnO/Al₂O₃=0.02-0.35; the mass percentage content of Li₂O+ZnO and B₂O₃ meets (Li₂O+ZnO)/B₂O₃≥1.0; and the mass percentage content of CeO₂ and Fe₂O₃ meets CeO₂/Fe₂O₃≥0.3.

2. The glass fiber composition for a large wind turbine blade according to claim 1, wherein the mass percentage content of Y₂O₃ and ZnO meets Y₂O₃+ZnO: 1.0-5.0%.

3. The glass fiber composition for a large wind turbine blade according to claim 1, wherein a density of the glass fiber composition for a large wind turbine blade is ≤2.61 g/cm³.

4. A glass fiber prepared by the glass fiber composition for a large wind turbine blade according to any one of claims 1 to 3, wherein a forming temperature of the glass fiber is 1280-1330 °C.

5. The glass fiber prepared by the glass fiber composition for a large wind turbine blade according to claim 4, wherein a specific modulus of the glass fiber is ≥3.80×10⁶ m.

6. The glass fiber prepared by the glass fiber composition for a large wind turbine blade according to claim 4, wherein an elastic modulus of the glass fiber is 98.7 GPa.

7. The glass fiber prepared by the glass fiber composition for a large wind turbine blade according to claim 4, wherein a liquidus temperature of the glass fiber is ≤1310 °C.
